# EUROPEAN PATENT APPLICATION

(11) **EP 4 621 691 A1**
(43) Date of publication of application: **24.09.2025**
(21) Application number: 25163362.4
(22) Date of filing: 12.03.2025
(51) Int. Cl.: G06Q 30/0201

(54) **SYSTEMS AND METHODS FOR CONVERTING HARDWARE-SOFTWARE-CLOUD TO AS-A-SERVICE (AAS)**

(30) Priority: 22.03.2024 US 202418614517
(71) Applicant: Ingram Micro Inc., Irvine, CA 92612 (US)
(72) Inventor: SAHOO, Sanjib, Naperville, IL 60564 (US)
(74) Representative: Zoebisch, Michael

(57) **Abstract**

Computerized systems and methods are described for converting traditional technology products into an "As a Service" (AaS) model, facilitating the transition from capital expenses (CapEx) to operational expenses (OpEx). Methods include receiving user inputs for technology product selections and accessing a Real-Time Data Mesh (RTDM) to retrieve data. An Advanced Analytics and Machine Learning (AAML) Module analyzes user inputs and market data, optimizing the conversion into subscription-based services. Process results are displayed to the user through a Single Pane of Glass User Interface (SPoG UI). An AaS Conversion Module performs transition of products into customizable subscription packages. This method emphasizes dynamic pricing based on usage, flexibility, and/or scalability of services. Methods are provided for real-time reporting, subscription management, and vendor system integration, enabling a comprehensive AaS conversion process suitable for modern technology products and services.

## Description

### CROSS REFERENCE TO RELATED APPLICATIONS

This application is a Continuation-In-Part (CIP) of U.S. Patent Application No. 18/341,714, filed on June 26, 2023 and U.S. Patent Application No. 18/349,836, filed on July 10, 2023. This application also claims the benefit of U.S. provisional application No. 63/513,073, filed on July 11, 2023; U.S. Provisional Application No. 63/513,078, filed on July 11, 2023; U.S. Provisional Application No. 63/515,075, filed on July 21, 2023; and U.S. Provisional Application No. 63/515,076, filed on July 21, 2023. Each of these applications is incorporated herein by reference in its entirety.

### BACKGROUND

Traditional ordering processes in distribution and supply-chain platforms are marred with inefficiencies, delays, and inaccuracies. In the conventional landscape, multiple systems and vendors usually perform each activity independently, from creating a bill of materials to registering deals, applying pricing, generating quotes, and submitting orders. This approach leads to operational inefficiencies and a heightened likelihood of errors.

Enterprise Resource Planning (ERP) systems have served as the mainstay in managing business processes, including distribution and supply chain. These systems act as central repositories where different departments such as finance, human resources, and inventory management can access and share real-time data. While ERPs are comprehensive, they present several challenges in today's complex distribution and supply chain environment. One of the primary challenges is data fragmentation. Data silos across different departments or even separate ERP systems make real-time visibility difficult to achieve. Users lack a comprehensive view of key distribution and supply chain metrics, which adversely affects decision-making processes.

Moreover, ERP systems often do not offer effective data integration capabilities. Traditional ERP systems are not designed to integrate efficiently with external systems or even between different modules within the same ERP suite. This design results in a cumbersome and error-prone manual process to transfer data between systems and affects the flow of information throughout the supply chain. Data inconsistencies occur when information exists in different formats across systems, hindering accurate data analysis and leading to uninformed decision-making.

Data inconsistency presents another challenge. When data exists in different formats or units across departments or ERPs, standardizing this data for meaningful analysis becomes a painstaking process. Businesses often resort to time-consuming manual processes for data transformation and validation, which further delays decision-making. Additionally, traditional ERP systems often lack the capabilities to handle large volumes of data effectively. These systems struggle to provide timely insights for operational improvements, particularly problematic for businesses dealing with complex and expansive distribution and supply chain networks.

Data security is another concern, especially considering the sensitive nature of supply chain data, which includes customer details, pricing, and contracts. Ensuring compliance with global regulations on data security and governance adds an additional layer of complexity. Traditional ERP systems often lack robust security features agile enough to adapt to the continually evolving landscape of cybersecurity threats and compliance requirements.

### BRIEF SUMMARY OF THE INVENTION

Automated "As a Service" (AaS) Model Conversion processes are designed to address deficiencies in the technology distribution industry by integrating various systems and activities into a unified interface, enabling the conversion of technology products - hardware, software, cloud services - into a subscription-based AaS model. This transformation from capital expenses to operational expenses faciliates the entire service selection and subscription process, and enhances efficiency in activities like service configuration, dynamic pricing application, and subscription management. The platform ensures data security and compliance while effectively integrating and accelerating conversion processes.

In the global distribution industry, challenges such as inefficient distribution management, SKU management, and the transition to direct-to-consumer models necessitate innovative solutions. Traditional distribution methods are increasingly insufficient, particularly with shifts in consumer expectations and regulations. By integrating functionalities for distribution management, supply chain management, and customer visibility, the platform supports a shift from traditional sales methods to a flexible, subscription-based service model.

According to some embodiments, a conversion module can be configured to incorporate algorithms to optimize product and service selections based on real-time market data and customer preferences. The system includes a conversion module that, integrated with Real-Time Data Mesh (RTDM) and Single Pane of Glass User Interface (SPoG UI), optimizes the offering of subscription-based services. Using advanced algorithms, it adapts offerings based on real-time market data and customer usage patterns, enhancing the flexibility and scalability of service options.

In a non-limiting example, a Subscription Recommendation Engine employs sophisticated algorithms to offer dynamic, usage-based service options to users. A Dynamic Pricing Engine, using models like multi-variable linear regression or Random Forest, predicts and adjusts subscription costs based on actual service usage, market conditions, and customer-specific factors.

In an embodiment, a Subscription Management and Real-Time Pricing module(s) operably connected with the RTDM and SPoG UI manages the lifecycle of subscriptions. The module(s) optimize service options based on real-time data, using algorithms to dynamically adjust pricing and service configurations. The system includes a pricing engine for cost prediction, adapting to variables like usage intensity and market trends.

In some embodiments, the system enables users to convert their selections into a subscription model with a single click via the SPoG UI. It includes a module for checking user permissions and aggregating configuration options based on current offerings, facilitating the subscription management process.

Additionally, or alternatively, the system employs validation algorithms, such as support vector machines, to ensure the accuracy of subscription configurations. It synchronizes real-time data from various systems, ensuring consistent and up-to-date information across the subscription model.

Embodiments disclosed herein integrate multiple systems, automate processes, and validate to automate the conversion of technology products into subscription-based services. By implementing intelligent rules and validations, the system efficiently executes complex tasks, reducing time and errors. The system's adaptability ensures it remains current and evolves to meet market and customer demands.

The system uses data-driven methods to automate creation and management of subscription packages based on user consumption patterns. This includes assembling various technology products and services into coherent subscriptions that align with individual usage patterns and preference. The system generates user profiles based on comprehensive data analysis, encompassing aspects like digital engagement and technology preferences. This data informs the creation of subscription packages that meet specific user requirements in areas such as software applications, cloud computing, and hardware needs.

In this process, personas are automatically generated based on comprehensive market research and real user data, broadly encompassing attributes including demographics, purchasing patterns, digital engagement, and preferences across various product categories. The identification of personas allows for a nuanced understanding of customer needs in areas such as technology, software applications, cloud computing solutions, and hardware requirements.

The system incorporates advanced algorithms to analyze user data, including historical usage and interaction patterns, to discern preferences and anticipate needs. This facilitates the creation of subscription packages that are highly relevant and appealing. Automated subscription bundling integrates products and services from different categories, ensuring each package meets the user's technological and service needs. Automated AaS subscription generation can include combinations like hardware with compatible software solutions and cloud services, designed to enhance user productivity and efficiency.

### Single Pane of Glass

The Single Pane of Glass (SPoG) can provide a comprehensive solution that is configured to address these multifaceted challenges. It can be configured to provide a holistic, user-friendly, and efficient platform that facilitates the distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to facilitate -As a Service (AaS) conversion, SPoG integrates data from various OEMs into a single platform. This not only ensures data consistency but also significantly reduces the potential for errors. Furthermore, it provides capabilities to manage AaS conversion efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, facilitating inventory management, ensuring compliance, simplifying AaS conversion, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDS offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies AaS conversion by integrating data from various OEMs, ensuring data consistency and reducing error potential. Its capabilities for managing products and market data align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. Firstly, it offers a holistic solution to the longstanding problems in the distribution industry. With the RTDM's capabilities, SPoG can enhance supply chain visibility, facilitate AaS conversion, and deliver a superior customer experience.

The real-time tracking and analytics offered by RTDM improve SPoG's ability to manage the supply chain and inventory effectively. It provides accurate and current information, enabling distributors to make informed decisions quickly.

Integrating SPoG with RTDM also ensures data consistency and reduces errors in AaS conversion. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates an embodiment of a system for distribution management.
FIG. 4 depicts a system for automated AaS conversion processes, according to an embodiment.
FIG. 5 illustrates an RTDM module, according to an embodiment.
FIG. 6 illustrates a SPoG UI, according to an embodiment.
FIG. 7 illustrates a system for automated AaS conversion, according to an embodiment.
FIG. 8 is a flow diagram of a method for automated AaS conversion processes, according to some embodiments of the present disclosure.
FIG. 9 is a flow diagram for automated services configuration in an AaS conversion system, according to some embodiments of the present disclosure.
FIG. 10 is a flow diagram for automated data management and analysis processes in an AaS conversion system, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

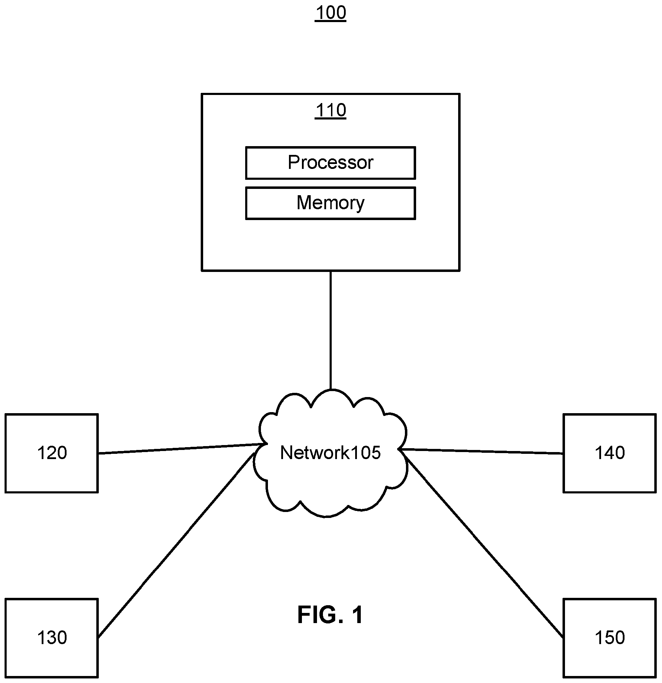

FIG. 1 illustrates an operating environment 100 of a distribution platform, referred to as System 110 in this embodiment. System 110 operates within the context of an information technology (IT) distribution model, catering to various users such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 can be the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to facilitate their supply chain operations, manage pricing and promotions, and gain insights into customer preferences and market trends. By integrating with System 110, vendors can expand their reach, access new markets, and enhance their overall visibility and competitiveness.

Resellers 150 can be intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there can be various dynamics and characteristics that contribute to its effectiveness. These dynamics include real-time data exchange, integration with existing enterprise systems, scalability, and flexibility. System 110 ensures that relevant data can be exchanged in real-time between users, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

System 110 can achieve scalability and flexibility. It can accommodate the growing demands of the IT distribution model, whether it involves an expanding customer base, an increasing number of vendors, or a wider range of IT products and services. System 110 can be configured to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these users. By leveraging real-time data exchange, integration, scalability, and flexibility, System 110 empowers users to optimize their operations, enhance customer experiences, and drive business success within the IT distribution ecosystem.

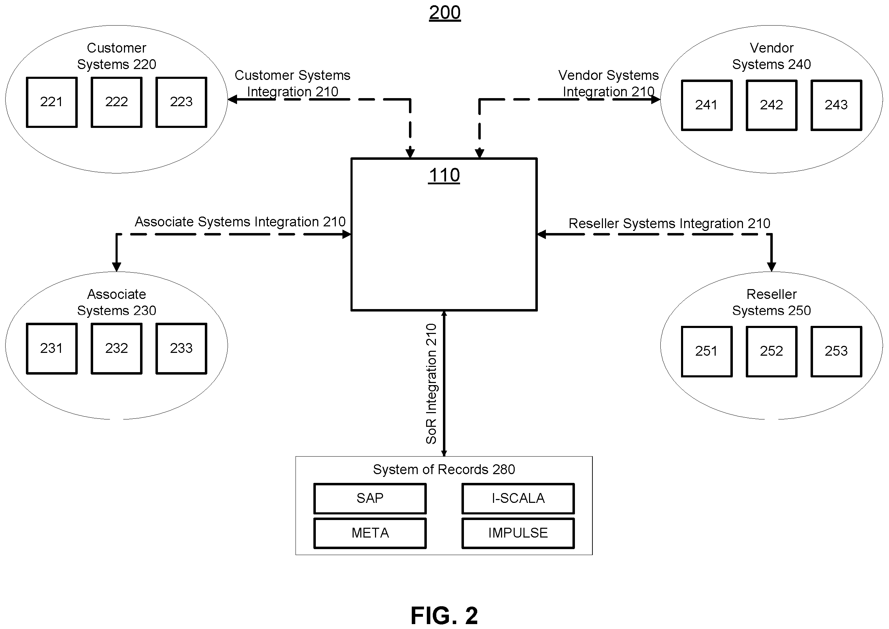

FIG. 2 depicts the operating environment 200 of the distribution platform, expanding upon elements introduced in FIG. 1. This environment features integration points 210, which enable data flow and connectivity among various systems like customer systems 220, vendor systems 240, reseller systems 260, and other entities within the AaS conversion process. FIG. 2 illustrates the network's interconnectedness and mechanisms that facilitate collaborative and data-driven decision-making for AaS conversion. Operating environment 200 configures to automate AaS conversion processes using AI and ML technologies, processing and analyzing data for service transformation.

Some embodiments of the AaS conversion process involve a systematic approach to transform traditional products or services into subscription-based models with minimal manual intervention. This process encompasses several technological components: Collection of diverse data including product specifications, user service interactions, and usage patterns. This data, aggregated from sources like CRM systems and web analytics tools, feeds into the Real-Time Data Mesh (RTDM). RTDM processes and standardizes this data, serving as a centralized repository for real-time data updating and retrieval. The AAML Module analyzes this aggregated data to identify optimal strategies for service conversion. It segments services based on data-driven insights and predicted user preferences. The AaS Conversion Module, informed by AAML Module insights, configures subscription services for each user or market segment. It applies predictive models and heuristic algorithms to determine service offerings that align with specific user requirements. Users interact with these services through the SPoG UI, customizing and confirming their subscription choices. The system includes a feedback loop where responses to subscription services are collected and analyzed, continually refining the service offerings.

AI algorithms in the AaS conversion process address inventory management, service customization, and optimization of user choices. Machine learning models, such as neural networks and decision trees, refine service offerings. The AaS process uses ML-based algorithms for real-time service configuration. Advanced analytics, like ensemble learning or reinforcement learning, continuously optimize the AaS process. AI and ML technologies in operating environment 200 employ supervised and unsupervised learning algorithms, including convolutional neural networks for pattern recognition and logistic regression for decision-making. These components adapt dynamically to changing data inputs like user preferences and market conditions, optimizing decision pathways through reinforcement learning. ML components leverage predictive analytics, continuously refining outputs by assimilating new data to enhance service conversion accuracy and relevance.

Operating environment 200 includes System 110 as the central hub for managing the AaS conversion process. System 110 functions as a bridge among customer systems 220, vendor systems 240, reseller systems 260, and other entities. It integrates communication, data exchange, and transactional processes, offering a cohesive experience. Moreover, environment 200 features integration points 210, using a hybrid architecture that combines RESTful APIs and WebSockets for real-time data exchange and synchronization. This architecture secures with SSL/TLS protocols, safeguarding data during transit.

Customer System Integration: Integration point 210 enables System 110 to connect with customer systems 220, facilitating efficient data exchange and synchronization. Customer systems 220 may include entities like customer system 221, customer system 222, and customer system 223. These systems represent internal systems used by customers, such as ERP or CRM systems. Integration with customer systems 220 allows customers to access real-time information on AaS subscriptions, including personalized bundles, pricing details, order tracking, and other relevant data, enhancing their decision-making capabilities. This integration offers an automated, real-time solution for creating and managing AaS conversion processes, improving operational efficiency for customers.

Data exchange among customer systems 220, vendor systems 240, and reseller systems 260 is enabled by a robust ETL (Extract, Transform, Load) described below in reference to the real-time data mesh architecture, in ensuring data consistency and reliability. This interaction can be governed by predefined business rules and logic, which dictate the data flow and processing methodologies. Advanced mapping and transformation tools are employed to harmonize disparate data formats, allowing for integration and utilization of data across these systems. Orchestrated data exchange supports synchronized operations, enabling efficient and informed decision-making across the distribution network.

Associate System Integration: Integration point 210 enables System 110 to connect with associate systems 230, facilitating efficient data exchange and synchronization. These systems contribute to the overall efficiency of AaS conversion processing by providing relevant market and product data.

Vendor System Integration: Integration point 210 facilitates the connection between System 110 and vendor systems 240. Vendor systems 240 may include entities like vendor system 241, vendor system 242, and vendor system 243, representing inventory management, pricing systems, and product catalogs. Integration with vendor systems 240 ensures vendors can efficiently update their offerings and receive real-time notifications, to facilitate the AaS conversion process.

Reseller System Integration: Integration point 210 allows reseller systems 260 to connect with System 110. Reseller systems 260 encompass entities such as reseller system 261, reseller system 262, and reseller system 263, handling sales, customer management, and service delivery. Integration empowers resellers to access up-to-date product information and manage customer relationships effectively.

Other Entity System Integration: Integration point 210 also connects other entities involved in the distribution process, facilitating collaboration and efficient distribution. This integration ensures real-time data exchange for AaS conversion processing and decision-making in the distribution ecosystem.

System 110's configuration includes sophisticated AI and ML capabilities to automate AaS conversion processing according to individual preferences, ensuring relevance and optimization in the distribution process.

Integration points 210 also enable connectivity with System of Records 280, for additional data management and integration. Representing System of Records 280 can represent enterprise resource planning (ERP) systems or customer relationship management (CRM) systems, including both future systems as well as legacy ERP systems such as SAP, Impulse, META, I-SCALA, and others. System of Records can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes. These systems represent the internal systems utilized by customers, vendors, and others.

Integration points 210 within the operating environment 200 can be facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable data exchange.

In some embodiments, System 110 can incorporate authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable users to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable users to operate within a connected ecosystem. Data generated at various touchpoints, including customer orders, inventory updates, pricing changes, or delivery status, flows between the different entities, systems, and components. The integrated data can be processed, harmonized, and made available in real-time to relevant users through System 110. This real-time access to accurate and current information empowers users to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

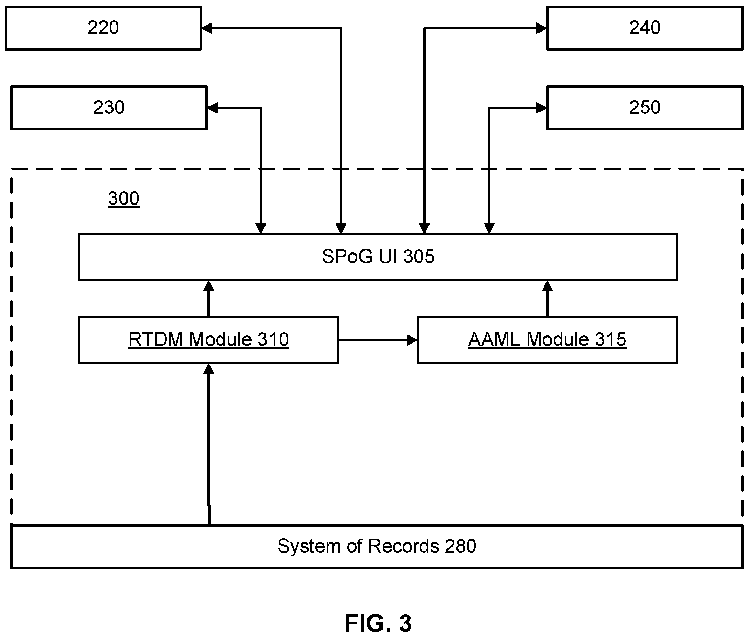

FIG. 3 illustrates a system 300 for supply chain and distribution management. System 300 (FIG. 3) is a supply chain and distribution management solution configured to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing users with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and workflows. Through API integrations, data synchronization mechanisms, and event-driven architectures, SPoG UI 305 ensures smooth information flow and enables collaborative decision-making across the distribution ecosystem. SPoG UI 305 is designed with a user-centric approach, featuring an intuitive and responsive layout. It utilizes front-end technologies to render dynamic and interactive data visualizations. Customizable dashboards allow users to tailor their views based on specific roles and requirements. The UI supports drag-and-drop functionality for ease of use, and its adaptive design ensures compatibility across various devices and platforms. Advanced filtering and search capabilities enable users to efficiently navigate and access relevant supply chain data and insights.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another component of System 300, responsible for ensuring the flow of data within the distribution ecosystem. It aggregates data from multiple sources, harmonizes it, and ensures its availability in real-time.

In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data can be then made available in real-time, allowing users to access accurate and current information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component can be specifically configured to work with various transactional systems, including legacy ERP systems, Customer Relationship Management (CRM) systems, and other enterprise-wide systems, ensuring compatibility and flexibility for businesses operating in diverse environments.

By having access to real-time data, users can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By leveraging machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

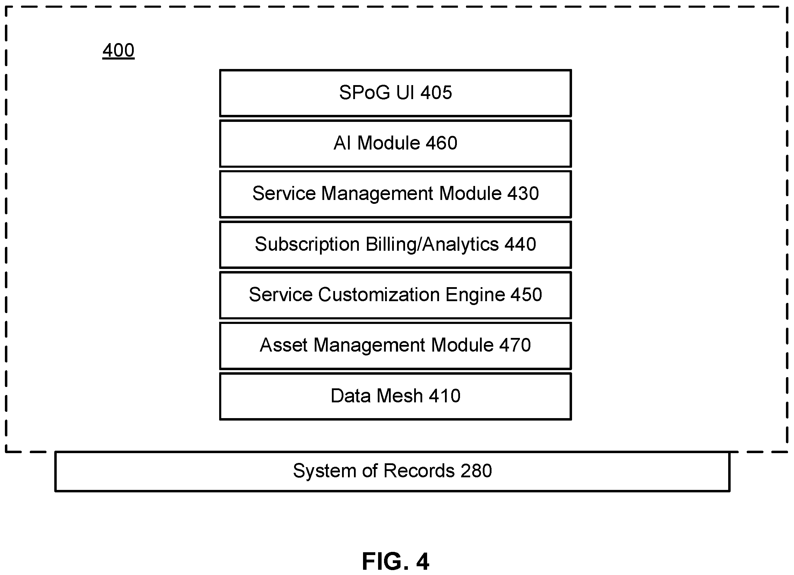

FIG. 4 depicts an embodiment of System 400 for automated conversion of any technology product to an "-As a Service" (AaS) model, incorporating the SPoG UI, RTDM, and AI/ML technologies, with interactions to achieve a comprehensive service conversion system. System 400 is configured for integration with existing reseller systems, ensuring efficient data exchange and system synchronization.

The SPoG UI 405 serves as the primary user interface. Users interact with this interface to perform various tasks provides straightforward interaction and customization. It displays information and options that are relevant to the distinct business models and customer demographics of the resellers. It displays real-time data from the Data Mesh 410 and provides controls for initiating actions in System 400. For example, a user can interact with a dynamic display for service options, interactive elements for subscription customization, and tools for real-time feedback on user selections, directly from the SPoG UI 405. It integrates with other system components to reflect accurate service information and user customization options. The SPoG UI is developed using web-based technologies, allowing it to be accessed from various types of devices such as desktop computers, laptops, tablets, and smartphones. SPoG UI 405 provides a comprehensive view of the entire distribution ecosystem, consolidating data and functionalities from various modules into a centralized, easy-to-navigate platform. SPoG UI 405 simplifies the management of complex distribution tasks, offering a streamlined experience for resellers. In some embodiments, SPoG 405 comprises dynamic pricing tools, displaying variable costs based on individual user consumption patterns. Dynamic pricing tools enable users to consider how their usage affects AaS subscription costs, promoting transparency and adaptability in pricing.

Data Mesh 410 is a sophisticated data management layer. It aggregates and harmonizes data from various sources, including ERPs, Vendor platforms, third-party databases, etc.. This component ensures that all operational modules in System 400 access consistent and up-to-date information. System 400 can synchronize with existing reseller systems, ensuring efficient data exchange and system functionality

Data mesh 410 aggregates, harmonizes, and ensures the real-time availability of data from various systems like inventory management, point-of-sale, and CRM. It employs Change Data Capture (CDC) to track real-time changes in transactional systems. This module standardizes data formats and units, ensuring data consistency and accuracy for decision-making processes related to service offerings.

AI Module 460 uses machine learning algorithms and predictive modeling to automate the conversion of products and services into subscription models. AI Module 460 analyzes market trends, user preferences, and consumption data to dynamically adjust service offerings. AI Module 460 is configured to dynamically adjust pricing and service options based on real-time usage data. This allows for a flexible subscription model that adapts to changing user needs and consumption habits.

AI Module 460 includes decision support systems for tailoring subscriptions based on sophisticated data analysis. In some embodiments, AI Module 460 employs deep learning neural networks, specifically convolutional neural networks (CNNs) and recurrent neural networks (RNNs), for pattern recognition and time-series analysis. For example, CNNs can be used to identify trends and patterns in market data, while RNNs, particularly LSTM (Long Short-Term Memory) networks, can analyze sequential data, such as time-based user interaction patterns. In some embodiments, AI module 460 can use decision trees for classification and regression tasks. These trees analyze user data and market conditions to segment users into different categories based on their service preferences. Random forest and gradient boosting algorithms, ensemble methods of decision trees, provide improved accuracy and stability in predictions. In some embodiments, clustering, particularly K-means and hierarchical clustering, is employed to segment the market and user base into distinct groups. Market/user segmentation assists AI Module 460 in understanding varied user preferences and customizing AaS subscription models for different market segments.

In some embodiments, AI Module 460 can use reinforcement learning (RL) to adapt service offerings based on user feedback. RL algorithms, particularly Q-learning and policy gradient methods, can adjust models to maximize user satisfaction, learning from each interaction to improve recommendation accuracy. I The module integrates reinforcement learning algorithms to continually adapt service offerings based on user feedback, enhancing the accuracy and relevance of customized subscriptions over time. Further, NLP techniques can be employed to analyze user feedback and queries. Utilizing tokenization, sentiment analysis, and named entity recognition, AI Module 460 interprets user feedback, enhancing the service customization process.

Real-time processing based on Data Mesh 410 enables AI module 460 to dynamically adjust service offerings based on current usage patterns and immediate market feedback. Data Mesh 410 also enables precise tracking of real-time usage data for implementing a usage-based pricing strategy. Data Mesh 410 can include collaborative filtering and content-based recommendation systems to analyze user behavior and preferences, comparing them with similar user profiles or content characteristics to suggest appropriate service adjustments.

In some embodiments, AI Module 460 can integrate predictive analytics tools, employing time series forecasting methods (e.g., AutoRegressive Integrated Moving Average, exponential smoothing, etc.) for predicting future service demand. Optimization algorithms, such as linear programming and genetic algorithms, can facilitate optimal subscription configurations, considering various factors like cost, user preferences, and resource availability to recommend the most effective service bundles. AI Module 460 can employ Monte Carlo simulations and scenario analysis for risk assessment and strategic planning, simulating different market scenarios, evaluating the potential impacts of various subscription models under different conditions.

Service Management Module 430 automatically oversees the lifecycle of services, including initiation, modification, and termination of subscriptions. It incorporates tools for service level management, compliance monitoring, customer request handling, and service alteration processes. Service Management Module 430 can employ real-time data to ensure service delivery aligns with user expectations and contractual agreements. The module can also be configured for managing multi-tiered subscription environments, facilitating the efficient handling of complex arrangements involving various technology products.

Subscription Billing and Analytics Module 440 handles financial transactions and provides analytical insights into service usage. Billing and Analytics 440 includes functionalities for invoice generation, payment processing, and financial reporting. Its analytical component analyzes consumption patterns, service popularity, and revenue trends, providing strategic insights for business decision-making. Subscription Billing and Analytics Module 440 can be configured to accommodate variable billing based on actual service usage and provides more in-depth analytical insights into user consumption patterns and preferences.

Service Customization Engine 450 allows users to personalize their service packages. It integrates with SPoG UI 405 and AI Module 460, facilitating user-driven service configuration. The engine uses algorithms to recommend service combinations based on user input and historical data, offering a tailored service experience. Service Customization Engine 450 can be configured to provide comprehensive personalization options, allowing users to personalize AaS subscription packages with various components like hardware, software, and additional services.

Asset Management Module 470 automatically tracks and manages the allocation and utilization of physical and digital assets within the subscription model. Asset Management Module 470 includes inventory control systems, asset tracking functionalities, and resource alignment tools. Asset Management Module 470 can explicitly represent ownership of physical assets by the service provider, aligning with the 'As a Service' model. This ensures users have access to the latest technology without the burden of ownership. It ensures that assets are optimally utilized and accurately accounted for in the service delivery process.

System 400 converts traditional product sales into a flexible, subscription-based service model. System 400 leverages real-time data processing, AI-driven analytics, and user customization capabilities to provide a seamless "As a Service" experience.

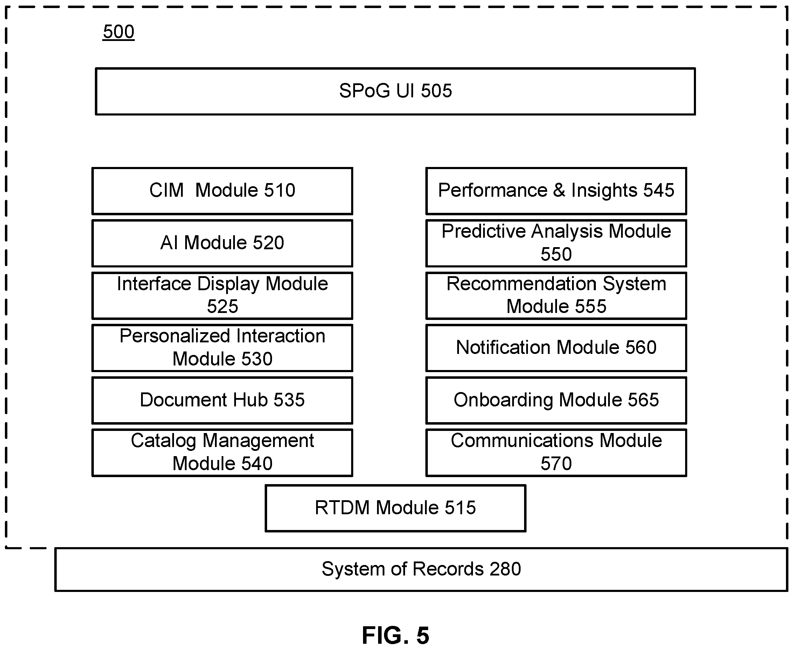

FIG. 5 depicts an embodiment of an advanced distribution platform including System 500 for managing a complex distribution network, which can be an embodiment of System 300, and provides a technology distribution platform for optimizing the management and operation of distribution networks. System 500 includes several interconnected modules, each serving specific functions and contributing to the overall efficiency of supply chain operations. In some embodiments, these modules can include SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570.

System 500, as an embodiment of System 300, can use a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 505, in some embodiments, serves as the central interface within System 500, providing users with a unified view of the entire distribution network. It utilizes frontend technologies such as ReactJS, TypeScript, and Node.js to create interactive and responsive user interfaces. These technologies enable the SPoG UI 505 to deliver a user-friendly experience, allowing users to access relevant information, navigate through different modules, and perform tasks efficiently.

The CIM 510, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for users.

The RTDM module 515, or Real-Time Data Mesh module, is a component of System 500 that ensures the smooth flow of data across the distribution ecosystem. It utilizes technologies such as Apache Kafka, Apache Flink, or Apache Pulsar for data ingestion, processing, and stream management. These technologies enable the RTDM module 515 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows users to access current and accurate information for informed decision-making.

The AI module 520 within System 500 can use advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 520 can utilize predictive models to forecast demand, allowing users to optimize inventory management and minimize stockouts or overstock situations.

The Interface Display Module 525 focuses on presenting data and information in a clear and user-friendly manner. It utilizes technologies such as HTML, CSS, and JavaScript frameworks like ReactJS to create interactive and responsive user interfaces. These technologies allow users to visualize data using various data visualization techniques, such as graphs, charts, and tables, enabling efficient data comprehension, comparison, and trend analysis.

The Personalized Interaction Module 530 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 535 serves as a centralized repository for storing and managing documents within System 500. It utilizes technologies like SeeBurger and Elastic Cloud for efficient document management, storage, and retrieval. For instance, the Document Hub 535 can employ SeeBurger's document management capabilities to categorize and organize documents based on their types, such as contracts, invoices, product specifications, or compliance documents, allowing users to easily access and retrieve relevant documents when needed.

The Catalog Management Module 540 enables the creation, management, and distribution of current product catalogs. It ensures that users have access to the latest product information, including specifications, pricing, availability, and promotions. Technologies like Kentico and Akamai can be employed to facilitate catalog updates, content delivery, and caching. For example, the module can use Akamai's content delivery network (CDN) to deliver catalog information to users quickly and efficiently, regardless of their geographical location.

The Performance and Insight Markers Display 545 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling users to take proactive measures to optimize operations.

The Predictive Analytics Module 550 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing users to optimize inventory levels and minimize costs.

The Recommendation System Module 555 focuses on providing intelligent recommendations to users within the distribution network. It generates personalized recommendations for products or services based on customer data, historical trends, and machine learning algorithms. Technologies like Adobe Target and Apache Spark can be employed for data analysis, modeling, and delivering targeted recommendations. For instance, the module can use Adobe Target's recommendation engine to analyze customer preferences and behavior, and deliver personalized product recommendations across various channels, enhancing customer engagement and driving sales.

The Notification Module 560 enables the distribution of real-time notifications to users regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to users' devices, ensuring timely and relevant information dissemination.

The Self-Onboarding Module 565 facilitates the onboarding process for new users entering the distribution network. It provides guided steps, tutorials, or documentation to help users become familiar with the system and its functionalities. Technologies such as Okta and Kentico can be employed to ensure secure user authentication, access control, and self-learning resources. For instance, the module can utilize Okta's identity and access management capabilities to securely onboard new users, providing them with appropriate access permissions and guiding them through the system's functionalities.

The Communication Module 570 enables communication and collaboration within System 500. It provides channels for users to interact, exchange messages, share documents, and collaborate on projects. Technologies like Apigee Edge and Adobe Launch can be employed to facilitate secure and efficient communication, document sharing, and version control. For example, the module can utilize Apigee Edge's API management capabilities to ensure secure and reliable communication between users, enabling them to collaborate effectively.

Thereby, System 500 can incorporate various modules that utilize a diverse range of technologies and algorithms to optimize supply chain and distribution management. These modules, including SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

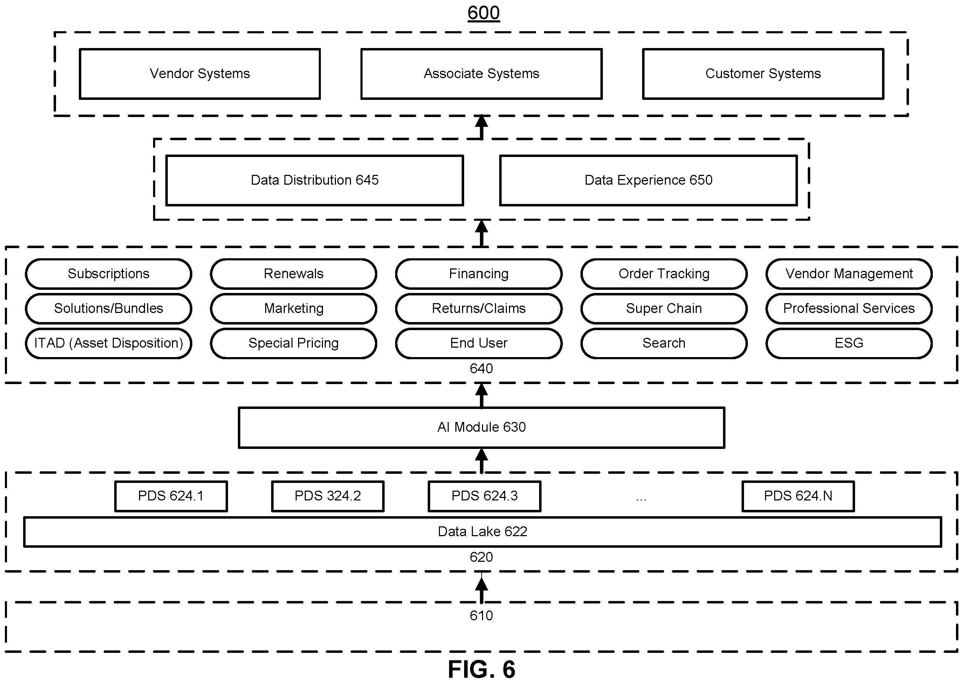

FIG. 6 illustrates RTDM module 600, according to an embodiment. RTDM module 600, which can be an embodiment of RTDM module 310, can include interconnected components, processes, and sub-systems configured to enable real-time data management and analysis.

The RTDM module 600, as depicted in FIG. 5, represents an effective data mesh and change capture component within the overall system architecture. The module can be configured to provide real-time data management and standardization capabilities, enabling efficient operations within the supply chain and distribution management domain.

RTDM module 600 can include an integration layer 610 (also referred to as a "system of records") that integrates with various enterprise systems. These enterprise systems can include ERPs such as SAP, Impulse, META, and I-SCALA, among others, and other data sources. Integration layer 610 can process data exchange and synchronization between RTDM module 600 and these systems. Data feeds can be established to retrieve relevant information from the system of records, such as sales orders, purchase orders, inventory data, and customer information. These feeds enable real-time data updates and ensure that the RTDM module operates with the most current and accurate data.

RTDM module 600 can include data layer 620 configured to process and translate data for retrieval and analysis. Data layer 620 includes data mesh, a cloud-based infrastructure configured to provide scalable and fault-tolerant data storage capabilities. Within the data mesh, multiple Purposive Datastores (PDS) can be deployed to store specific types of data, such as customer data, product data, or inventory data. Each PDS can be optimized for efficient data retrieval based on specific use cases and requirements. The PDSes can be configured to store specific types of data, such as customer data, product data, finance data, and more. These PDS serve as repositories for canonized and/or standardized data, ensuring data consistency and integrity across the system.

In some embodiments, RTDM module 600 implements a data replication mechanism to capture real-time changes from multiple data sources, including transactional systems like ERPs (e.g., SAP, Impulse, META, I-SCALA). The captured data can then be processed and standardized on-the-fly, transforming it into a standardized format suitable for analysis and integration. This process ensures that the data is readily available and current within the data mesh, facilitating real-time insights and decision-making.

More specifically, data layer 620 within the RTDM module 600 can be configured as a powerful and flexible foundation for managing and processing data within the distribution ecosystem. In some embodiments, data layer 620 can encompasses a highly scalable and robust data lake, which can be referred to as data lake 622, along with a set of purposive datastores (PDSes), which can be denoted as PDSes 624.1 to 624.N. These components integrate to ensure efficient data management, standardization, and real-time availability.

Data layer 620 incudes data lake 622, a state-of-the-art storage and processing infrastructure configured to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 622 can accommodate the influx of data from diverse sources.

Associated with data lake 622, a population of purposive datastores, PDSes 624.1 to 624.N, can be employed. Each PDS 624 can function as a purpose-built repository optimized for storing and retrieving specific types of data relevant to the supply chain domain. In some non-limiting examples, PDS 624.1 may be dedicated to customer data, storing information such as customer profiles, preferences, and transaction history. PDS 624.2 may be focused on product data, encompassing details about SKU codes, descriptions, pricing, and inventory levels. These purposive datastores allow for efficient data retrieval, analysis, and processing, catering to the diverse needs of supply chain users.

To ensure real-time data synchronization, data layer 620 can be configured to employ one or more change data capture (CDC) mechanisms. These CDC mechanisms can be integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 620 ensures that the data within the data lake 622 and PDSes 624 remains current, providing users with real-time insights into the distribution ecosystem.

In some embodiments, data layer 620 can be implemented to facilitate integration with existing enterprise systems using one or more frameworks, such as .NET or Java, ensuring compatibility with a wide range of existing systems and providing flexibility for customization and extensibility. For example, data layer 620 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 620 can use the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain users can perform complex analytical tasks, apply machine learning algorithms, and derive valuable insights from the data. For instance, data layer 620 can use Apache Spark's machine learning libraries to develop predictive models for demand forecasting, optimize inventory levels, and identify potential supply chain risks.

In some embodiments, data layer 620 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 620 can implement data lineage and audit trail mechanisms, allowing users to trace the origin and history of data, ensuring data integrity and compliance with regulatory requirements.

In some embodiments, data layer 620 can be deployed in a cloud-native environment, leveraging containerization technologies such as Docker and orchestration frameworks like Kubernetes. This approach ensures scalability, resilience, and efficient resource allocation. For example, data layer 620 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 620 of RTDM module 600 can incorporate a highly scalable data lake, data lake 622, along with purpose-built PDSes, PDSes 624.1 to 624.N, and employing CDC mechanisms, data layer 620 ensures efficient data management, standardization, and real-time availability. In a non-limiting example, Data Layer 620 can be implemented utilizing any appropriate technology, such as .NET or Java, and/or distributed computing frameworks like Apache Spark, enables powerful data processing, advanced analytics, and machine learning capabilities. With robust data governance and security measures, data layer 620 ensures data integrity, confidentiality, and compliance. Through its scalable infrastructure and integration with existing systems, data layer 620 enables supply chain users to make data-driven decisions, optimize operations, and drive business success in the dynamic and complex distribution environment.

RTDM module 600 can include an AI module 630 configured to implement one or more algorithms and machine learning models to analyze the stored data in data layer 620 and derive meaningful insights. In some non-limiting examples, AI module 630 can apply predictive analytics, anomaly detection, and optimization algorithms to identify patterns, trends, and potential risks within the supply chain. AI module 630 can continuously learns from new data inputs and adapts its models to provide accurate and current insights. AI module 630 can generate predictions, recommendations, and alerts and publish such insights to dedicated data feeds.

Data engine layer 640 comprises a set of interconnected systems responsible for data ingestion, processing, transformation, and integration. Data engine layer 640 of RTDM module 600 can include a collection of headless engines 640.1 to 640.N that operate autonomously. These engines represent distinct functionalities within the system and can include, for example, one or more recommendation engines, insights engines, and subscription management engines. Engines 640.1 to 640.N can use the standardized data stored in the data mesh to deliver specific business logic and services. Each engine can be configured to be pluggable, allowing for flexibility and future expansion of the module's capabilities. Exemplary engines are shorn in FIG. 5, which are not intended to be limiting. Any additional headless engine can be included in data engine layer 640 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms can be applied to cleanse, aggregate, and enrich the data, making it ready for further analysis and integration.

Further, to facilitate integration and access to RTDM module 600, a data distribution mechanism can be employed. Data distribution mechanism 645 can be configured to include one or more APIs to facilitate distribution of data from the data mesh and engines to various endpoints, including user interfaces, micro front ends, and external systems.

Experience layer 650 focuses on delivering an intuitive and user-friendly interface for interacting with supply chain data. Experience layer 650 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 600 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, current information and insights to make informed decisions and optimize supply chain operations. Accordingly, RTDM module 600 facilitates supply chain and distribution management by providing a scalable, real-time data management solution. Its innovative architecture allows for the rich integration of disparate data sources, efficient data standardization, and advanced analytics capabilities. The module's ability to replicate and standardize data from diverse ERPs, while maintaining auditable and repeatable transactions, provides a distinct advantage in enabling a unified view for vendors, resellers, customers, end customers, and other entities in a distribution system, including an IT distribution system.

### AUTOMATED AAS MODEL CONVERSION

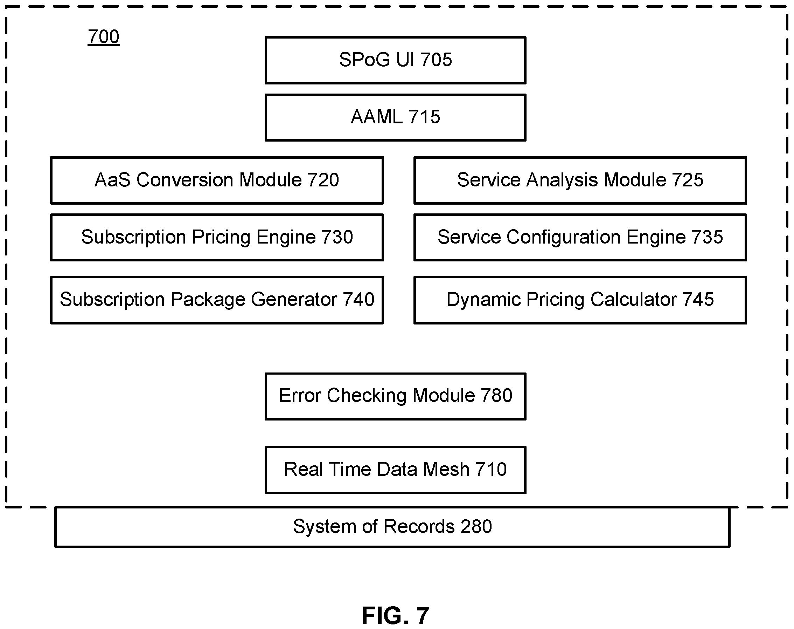

In an embodiment, FIG. 7 depicts System 700 for converting technology products into an AaS model. System 700 includes the Real-Time Data Mesh 710, Single Pane of Glass User Interface (SPoG UI) 705, Advanced Analytics and Machine-Learning (AAML) Module 715, and the AaS Conversion Module 720.

In some embodiments, SPoG UI 705, which can be an embodiment of SPoG UIs described above, can be enhanced with a one-click conversion feature, allowing users to instantly convert their shopping cart into a subscription-based service model, thereby simplifying the transition to a monthly payment plan and enhancing user experience.

RTDM 710 aggregates and standardizes real-time data from various sources, crucial for the efficient operation of the AaS Conversion Module 720. This includes data on product specifications, subscription usage patterns, and market trends. RTDM 710 establishes a centralized, unified data hub, aggregating and standardizing data from multiple sources such as ERPs, CRM systems, and market intelligence. It utilizes a blend of data warehousing and data lakes to handle both structured and unstructured data efficiently. RTDM 710 employs ETL processes and data normalization techniques to ensure uniformity and accessibility of data. This standardized data is vital for the functioning of AaS Conversion Module 720, supplying the required inputs for precise and effective conversion of products into subscription-based services. RTDM 710 maintains data integrity and relevance, vital for the automated processes of AaS conversion. In some embodiments, RTDM 710 is cofngured to interface with asset management systems, supporting the service provider's ownership of physical assets while allowing users to access and utilize these assets under a comprehensive service agreement.

AAML Module 715 functions as the central processing unit for the AaS conversion process. It contains specialized rules and algorithms designed for key tasks in AaS conversion, such as analyzing product compatibility for service conversion, optimizing subscription models, and applying dynamic pricing strategies. AAML Module 715 employs analytics tools for big data processing and deep learning capabilities. It conducts sentiment analysis, trend forecasting, and behavioral analytics to understand and anticipate market and user demands. AAML Module 715 integrates and trains machine learning algorithms based on historical data sets to identify usage patterns and make predictive recommendations for subscription models. It adapts its algorithms based on continuous feedback loops, refining its precision over time. This module performs functions critical to the automated AaS conversion process, ensuring that the services align with individual user preferences and market conditions.

In an embodiment, AaS Conversion Module 720 processes data for converting traditional technology products into subscription-based services. It integrates data on product specifications, subscription usage patterns, and market trends from RTDM 710. Module 720 analyzes product-service compatibility and utilizes information from AAML 715 for dynamic pricing. It executes the conversion of products to services, ensuring alignment with market data and user preferences. AaS Conversion Module 720 incorporates methodology for transforming conventional one-time purchase technology items into subscription-based services. This mechanism is capable of converting complete shopping carts, for example, into a service model, facilitating the transition from capital expenses (CapEx) to operational expenses (OpEx). In some embodiments, AaS Conversion Module 720 is configured to bundle various technology offerings, including hardware, software, cloud services, and warranties into a single, unified subscription package, enhancing the value proposition and simplifying user experience.

Service Analysis Sub-Module 725: Sub-Module 725 evaluates products for subscription model compatibility. It processes data from RTDM 710, focusing on market demand analysis, user preference assessment, and technical feasibility studies. The module applies analytical tools to assess product fit within the subscription model and evaluates service quality standards.

Subscription Pricing Engine 730 employs algorithms for pricing subscription services dynamically. It processes market data and user engagement metrics from RTDM 710, applying predictive models from AAML 715. The engine adapts prices for diverse customer profiles, considering market conditions to maintain financial viability of subscription services. In some embodiments, Subscription Pricing Engine 730 can implement dynamic pricing algorithms, which adjust charges based on actual service usage, such as reducing costs during periods of decreased usage (e.g., vacation times), thereby reflecting a true consumption-based pricing model.

Service Configuration Engine 735 facilitates subscription service selection and customization for users. It integrates with SPoG UI 705, offering configuration options based on RTDM 710 data, including real-time service availability and user preferences. In some embodiments, Service Configuration Engine 735 can include a flexibility module configured to enable users to switch between different services and scales, such as modifying subscription levels or transitioning between various streaming services. This module ensures adaptability to user needs and market changes.

Subscription Package Generator 740 compiles service packages by matching inventory and service capabilities from RTDM 710 with user requirements. It uses RESTful APIs and data connectors for real-time data synchronization, optimizing subscription package configurations.

Dynamic Pricing Calculator 745 calculates subscription package costs. It retrieves pricing data and promotional details from RTDM 710, applying user-specific discounts. The calculator ensures competitive and personalized pricing for each subscription package.

Error-Check Integrator 780 validates subscription configurations and selections against predefined criteria from AAML 715. It ensures error-free and consistent subscription packages before their finalization, employing algorithms for accuracy verification.

System 700 can be configured to integrate a multi-tiered management module capable of handling complex interactions across hardware, software, and cloud services layers. This can include robust API integrations and efficient lifecycle management to ensure seamless service delivery. In some embodiments, system 700 can include via SPoG 705 advanced tools for managing the technical and administrative challenges of subscriptions, including billing management, co-terming of services, and dynamic adaptation to changes in subscription terms and conditions.

Thereby, System 700 is configured to integrate data from multiple sources into a unified interface via the SPoG UI 705, automate various tasks in the AaS conversion process via the AAML 715, and maintain a real-time, standardized data repository via the RTDM 710. This architecture enables efficient and accurate processes for converting any technology product into an AaS model, enhancing the overall customer experience in the IT distribution industry.

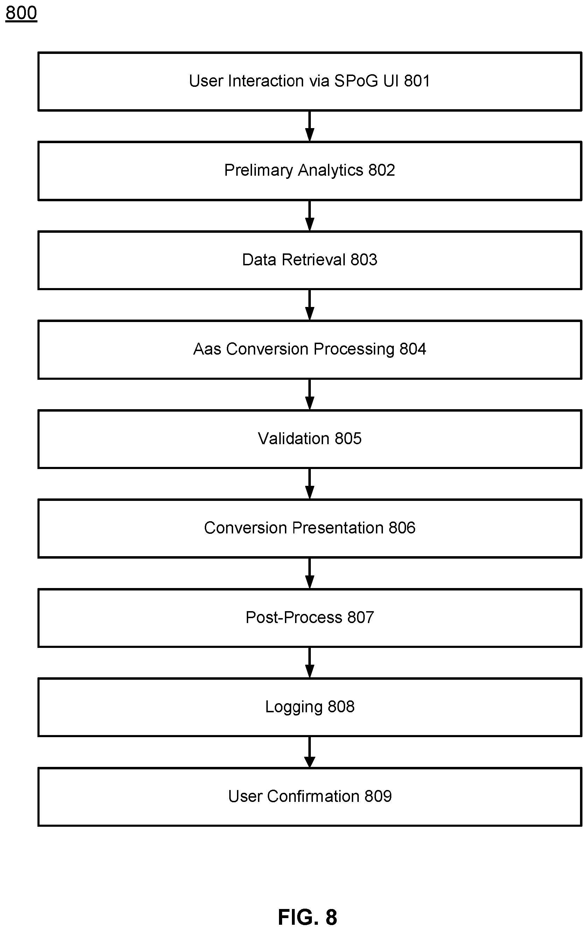

FIG. 8 illustrates a flow diagram of method 800 for the AaS conversion process, according to embodiments of the present disclosure. This flowchart delineates operations from initiation to completion, highlighting the AaS Conversion Module 720 in System 700.

At Operation 801, the user begins the conversion process by interacting with the Single Pane of Glass User Interface (SPoG UI) 705. Operation 801 encompasses the collection of user inputs such as product selections and service requirements. SPoG UI 705 then liaises with the Advanced Analytics and Machine Learning (AAML) Module 715 to analyze these inputs.

At Operation 802, AAML Module 715 executes preliminary analytics to identify the user's specific needs for AaS conversion. Algorithms within AAML 715 evaluate the user's input, considering elements like historical usage patterns and prevailing market conditions, to formulate optimal service conversion strategies.

At Operation 803, the process advances to Real-Time Data Mesh (RTDM) 710. RTDM 710 gathers data relevant to the user's selections, including current service specifications and product availability, using RESTful APIs for data retrieval.

At Operation 804, AaS Conversion Module 720 processes the user's request. This module, incorporating tools such as the Service Analysis Sub-Module 725 and Subscription Pricing Engine 730, develops a tailored subscription package. The Service Analysis Sub-Module 725 assesses product compatibility for subscription models, while the Subscription Pricing Engine 730 calculates the pricing for the service package.

At Operation 805, Error-Check Integrator 780 validates the accuracy and feasibility of the proposed subscription package. This integrator utilizes algorithms from AAML 715 to ensure the integrity and coherence of the subscription service.

At Operation 806, the system presents the proposed subscription package, including its components and pricing, back to the user on SPoG UI 705 for review and approval.

At Operation 807, AaS Conversion Module 720 employs machine learning models to analyze the conversion process post-implementation. These models apply predictive analytics to refine the conversion mechanism, improving future conversions based on updated user data and market trends.

At Operation 808, a logging mechanism within AaS Conversion Module 720 records transaction details. This includes user selections and the finalized subscription package composition, contributing to the ongoing enhancement of the system.

At Operation 809, the user reviews, adjusts if necessary, and confirms the subscription package on SPoG UI 705. User confirmation marks the completion of the AaS conversion process.

This operational flow integrates SPoG UI 705, RTDM 710, AAML 715, and AaS Conversion Module 720. Each module fulfills specific roles, collectively automating and refining the AaS conversion process. Alternative embodiments might include variations in machine learning algorithms, data acquisition techniques, and user interface designs, enhancing the adaptability and scalability of System 700.

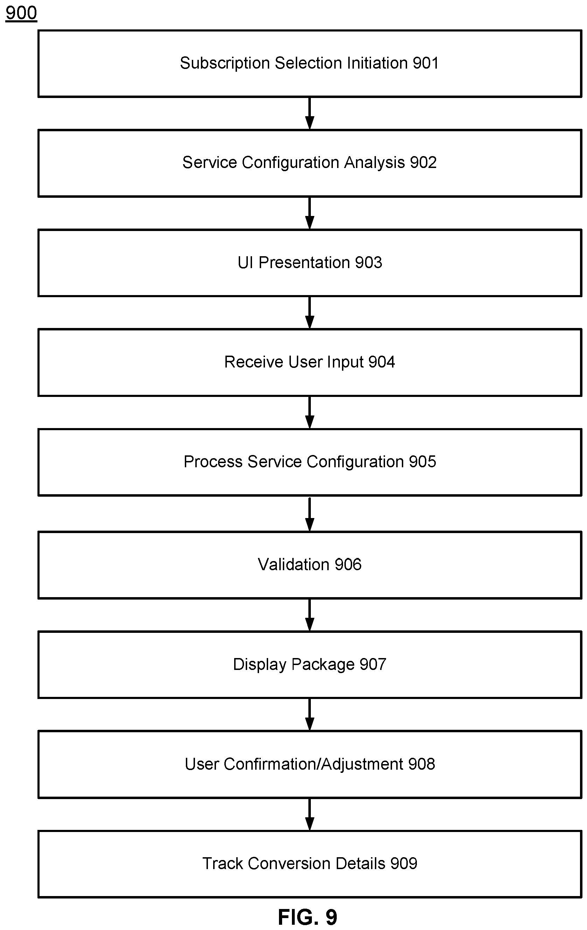

FIG. 9 illustrates a flow diagram of method 900 for user interaction and service configuration, as per embodiments in the present disclosure. This flowchart outlines the user's journey from selecting to finalizing their subscription services, focusing on their interaction with SPoG UI 705 and Service Configuration Engine 735 in System 700.

At Operation 901, the user initiates the subscription selection process through SPoG UI 705. This operation involves the user entering their service preferences and requirements into the interface. SPoG UI 705 is designed to capture and transmit these inputs to the Service Configuration Engine 735 for further processing.

At Operation 902, Service Configuration Engine 735 receives the user input from SPoG UI 705. It analyzes the provided data to propose a range of subscription services that align with the user's stated preferences. The engine leverages real-time data from RTDM 710 to ensure that service offerings are current and relevant.

At Operation 903, Service Configuration Engine 735 presents the user with a selection of customizable subscription options. This step allows the user to review and modify the proposed services, ensuring they align with their specific needs.

At Operation 904, the user interacts with SPoG UI 705 to adjust and refine their subscription choices. This operation may involve selecting additional features, altering service levels, or modifying other aspects of the subscription package.

At Operation 905, the user's refined choices return to Service Configuration Engine 735 for final processing. The engine applies any additional user modifications and prepares the subscription package for final review.

At Operation 906, Error-Check Integrator 780 evaluates the configured subscription package for accuracy and completeness. This integrator applies criteria from AAML 715 to validate the user's selections and the coherence of the subscription package.

At Operation 907, SPoG UI 705 displays the finalized subscription package to the user. This includes a detailed breakdown of services, features, and pricing, allowing the user to conduct a final review before confirmation.

At Operation 908, the user either confirms the subscription package via SPoG UI 705 or returns to previous operations for further adjustments. Upon confirmation, the subscription process advances to completion.

At Operation 909, a logging mechanism within Service Configuration Engine 735 records the finalized subscription details, including user inputs and the package composition. This data contributes to continuous improvement in user interface design and service configuration processes.

Method 900 integrates SPoG UI 705, Service Configuration Engine 735, and Error-Check Integrator 780 in a structured flow. This integration facilitates user-centric subscription configuration and optimization, enhancing the overall user experience within System 700. Alternative embodiments may involve different user interface layouts, configuration algorithms, and validation mechanisms to adapt to diverse user needs and preferences.

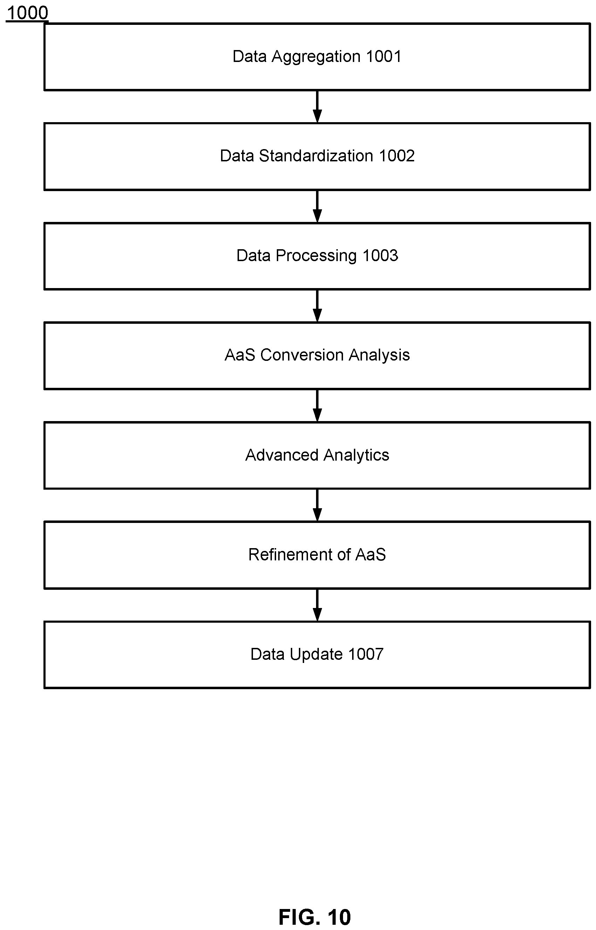

FIG. 10 depicts a flow diagram of method 1000 for data management and analysis workflow, in line with embodiments of the current disclosure. This flowchart explicates the process through which RTDM 710 aggregates, standardizes, and manages real-time data, and the subsequent utilization of this data by the AaS Conversion Module 720 and AAML 715.

At Operation 1001, RTDM 710 initiates the data aggregation process. This involves collecting data from various sources, including ERPs, CRM systems, and external market intelligence platforms. The operation focuses on gathering a wide array of data relevant to the AaS conversion process, such as product specifications, user interaction data, and market trends.

At Operation 1002, RTDM 710 standardizes the aggregated data. It employs ETL (Extract, Transform, Load) processes to format the data uniformly, ensuring consistency across various data types and sources. This step is crucial for maintaining data integrity and facilitating effective data analysis.

At Operation 1003, RTDM 710 processes the standardized data using data normalization techniques. This process involves adjusting the data to fit a common scale without distorting differences in ranges of values. It ensures that the data is ready for detailed analysis and processing by AaS Conversion Module 720 and AAML 715.

At Operation 1004, the processed data flows to AaS Conversion Module 720. Here, the module analyzes the data to determine the feasibility of converting specific products or services into the AaS model. It assesses various factors, such as market viability, user demand, and technical compatibility.

At Operation 1005, AAML 715 receives data from RTDM 710 for advanced analytics. AAML 715 applies machine learning algorithms and predictive analytics to the data, extracting insights relevant to dynamic pricing strategies, user behavior patterns, and market trends.

At Operation 1006, the AaS Conversion Module 720 utilizes insights provided by AAML 715 to refine the AaS conversion process. It integrates analytical outcomes to optimize service packages and pricing models, aligning them with current market conditions and user expectations.

At Operation 1007, RTDM 710 updates its data repository with new insights and analysis outcomes from AAML 715 and AaS Conversion Module 720. This continuous feedback loop ensures that RTDM 710 maintains an up-to-date and relevant data pool, essential for the ongoing effectiveness of the AaS conversion process.

Method 1000 presents a comprehensive workflow integrating RTDM 710, AaS Conversion Module 720, and AAML 715. This workflow is pivotal in managing and analyzing data, directly impacting the efficacy of the AaS conversion process within System 700. Alternative embodiments may incorporate varying data processing techniques, analytics algorithms, and data flow structures, catering to evolving data management needs and conversion strategies.

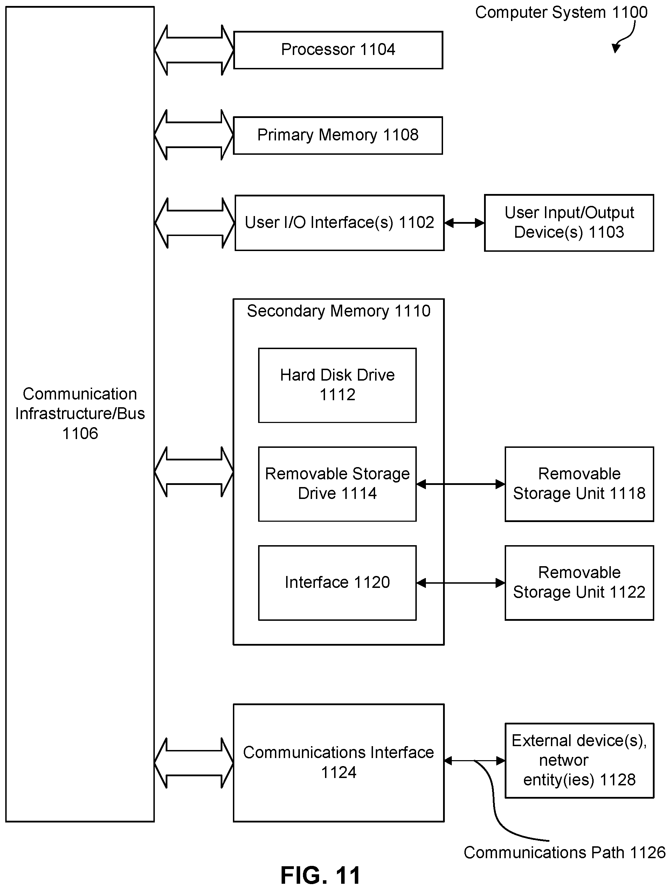

FIG. 11 depicts a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

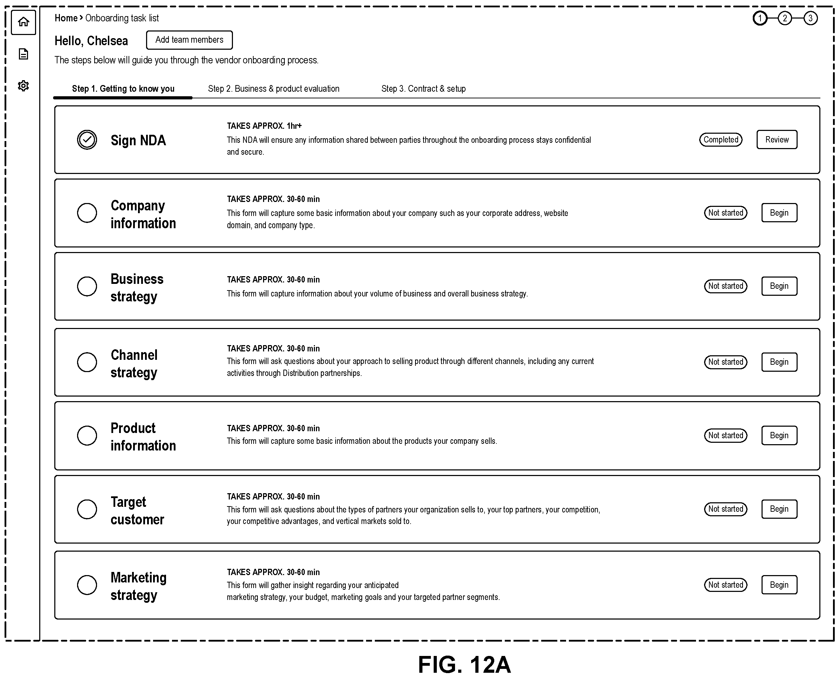

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:
FIG. 12A depicts a Vendor Onboarding Initiation screen that represents the initial step of the vendor onboarding process. It provides a form or interface where vendors can express their interest in joining the distribution ecosystem. Vendors can enter their basic information, such as company details, contact information, and product catalogs.

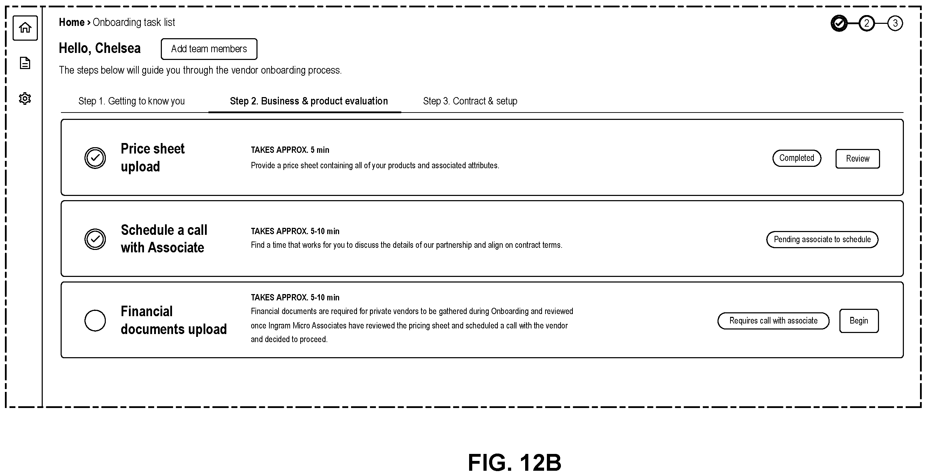

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

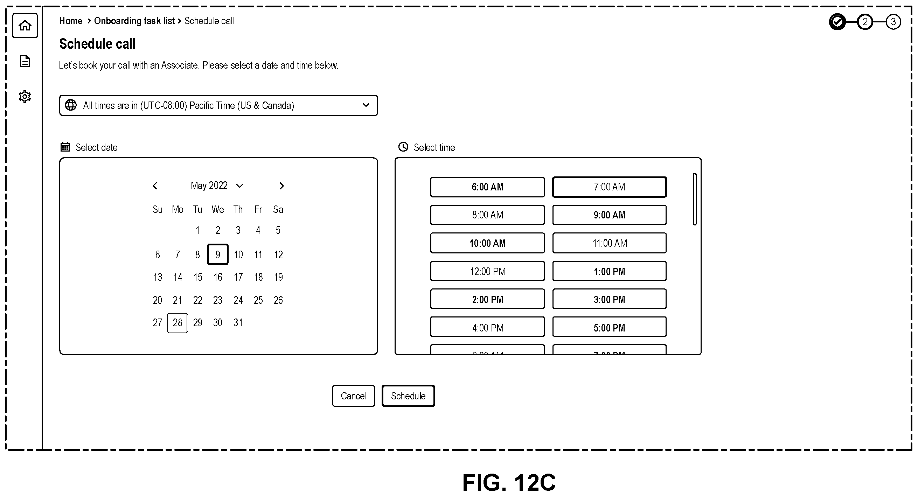

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

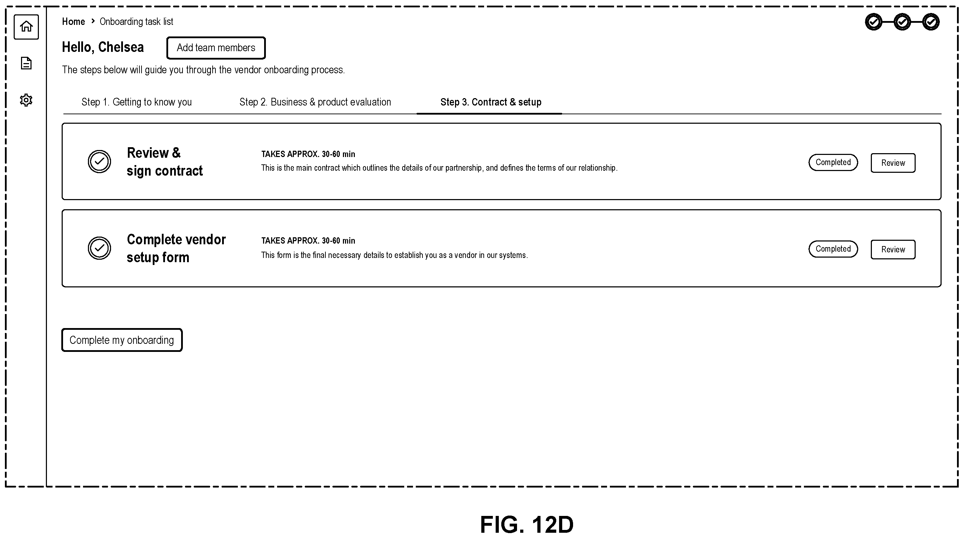

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

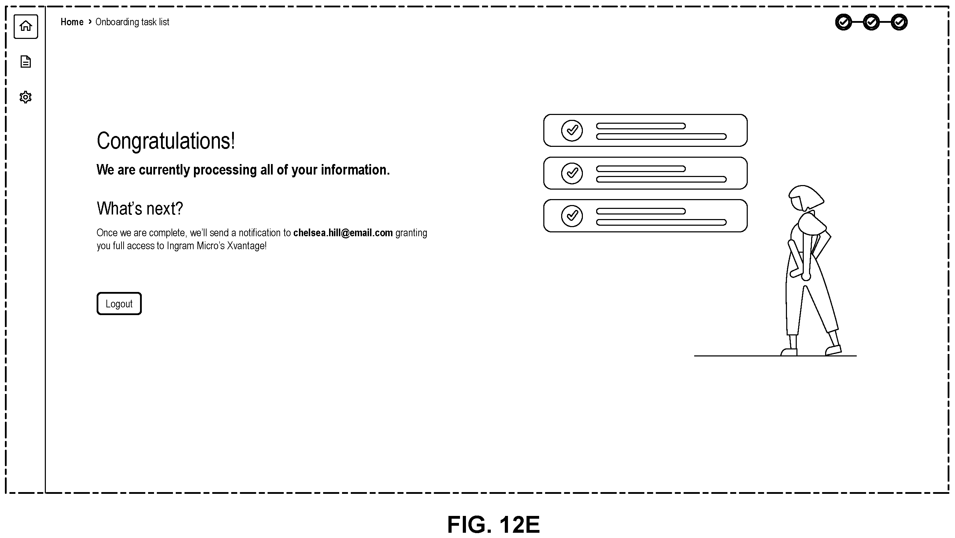

FIG. 12E depicts a Vendor Onboarding Completion Screen that confirms the successful completion of the vendor onboarding process. It may display a congratulatory message or summary of the completed tasks, indicating that the vendor is now officially onboarded into the distribution ecosystem.

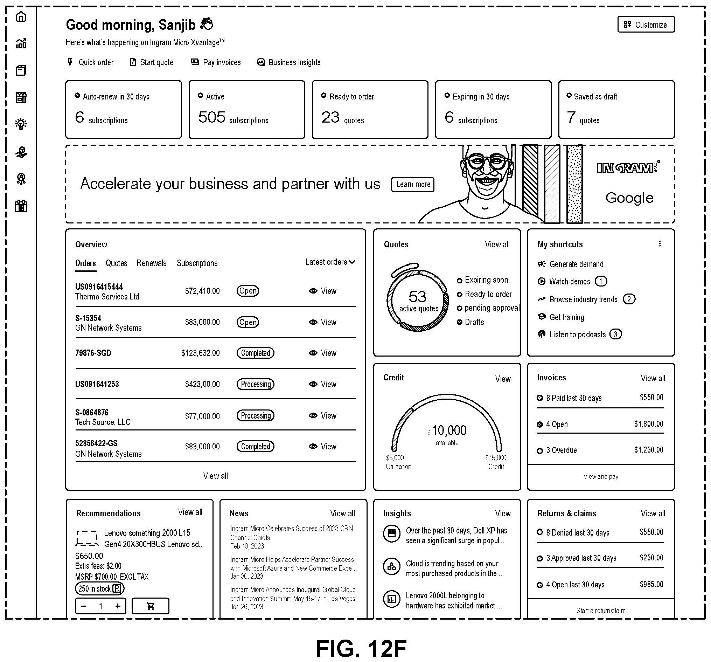

FIG. 12F depicts a Partner Dashboard that offers partners or users a centralized view of relevant information and metrics related to their partnership with the distribution ecosystem. It provides an overview of performance indicators, key data points, and actionable insights to facilitate effective collaboration and decision-making.

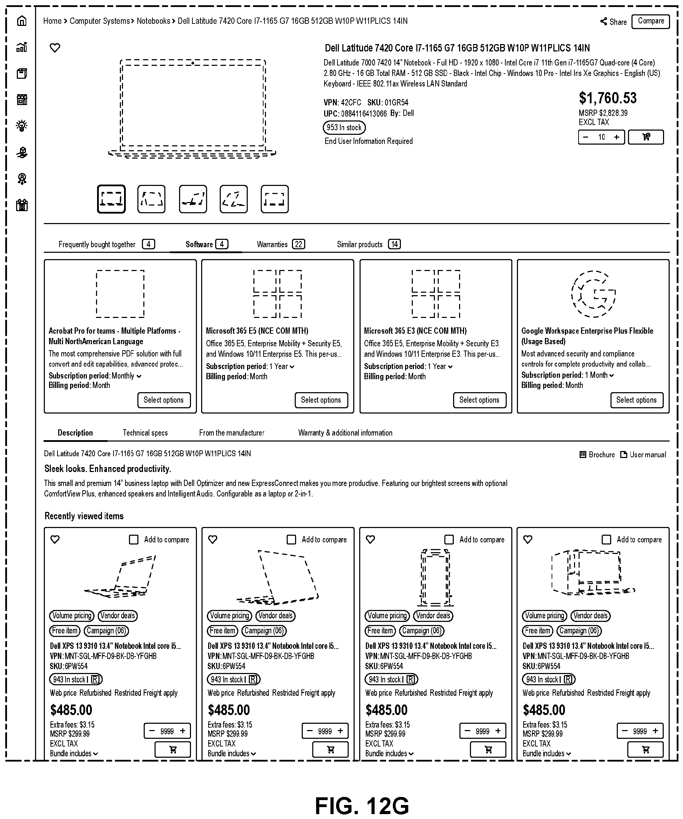

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

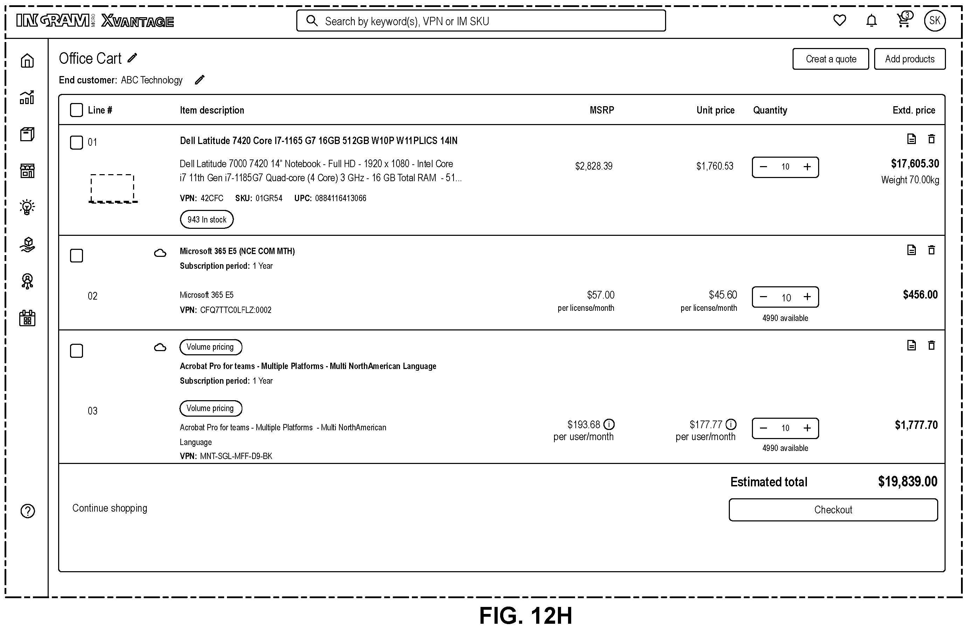

FIG. 12H depicts a Customer Subscription Cart that allows customers to manage their subscription-based purchases. It displays the selected subscription plans, pricing, and duration. Customers can review and modify their subscription details before finalizing their choices.

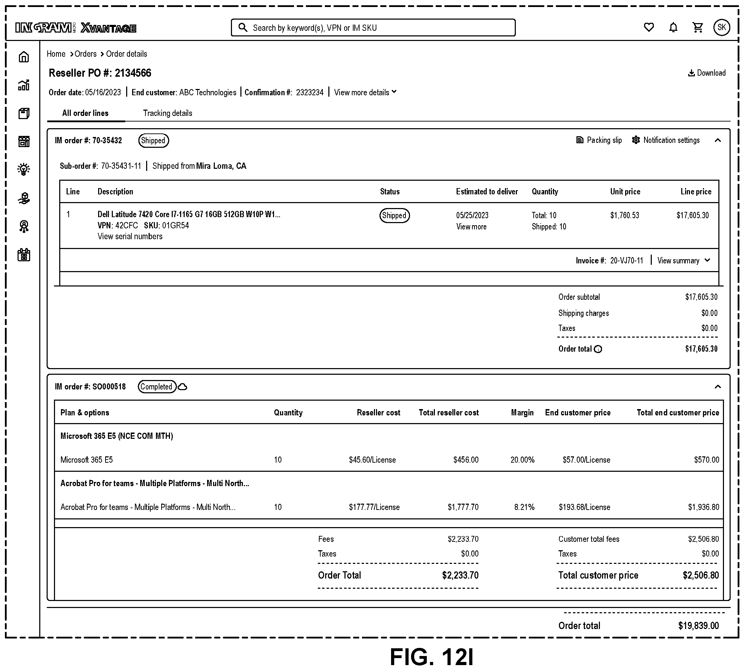

FIG. 12I depicts a Customer Order Summary that provides a summary of the customer's order, including details such as the products or subscriptions purchased, quantities, pricing, and any applied discounts or promotions. It allows customers to review their order before confirming the purchase.

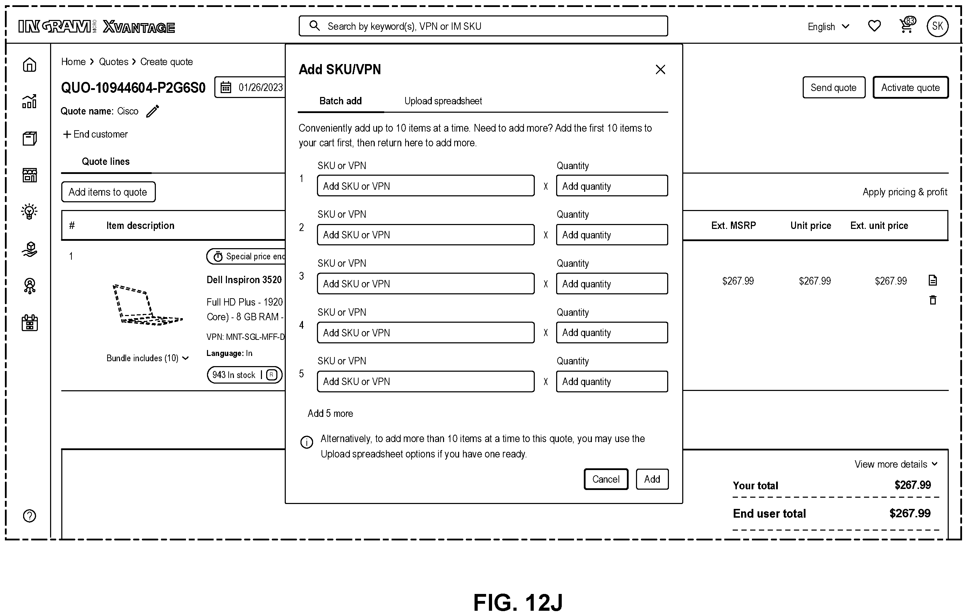

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

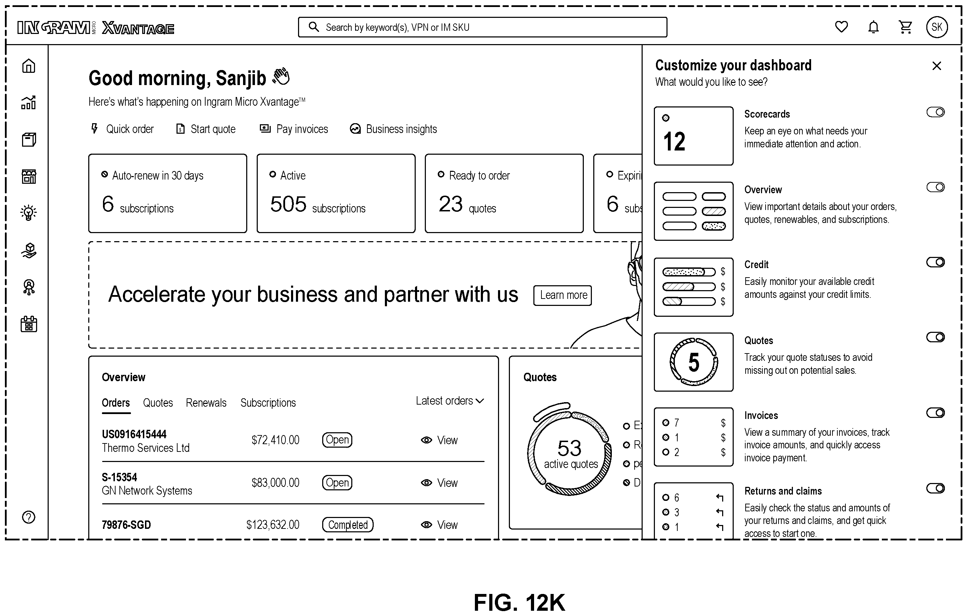

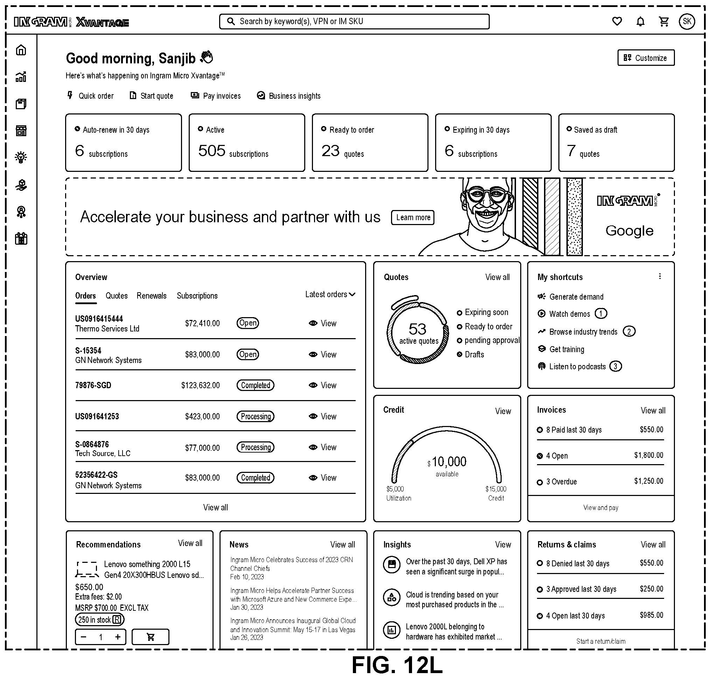

FIGS. 12K and 12L depicts Dashboard Order Summary to display summarized information about orders placed within the distribution ecosystem. They present key order details, such as order number, customer name, product or subscription information, quantity, and order status. The dashboard provides an overview of order activity, enabling users to track and manage orders efficiently.

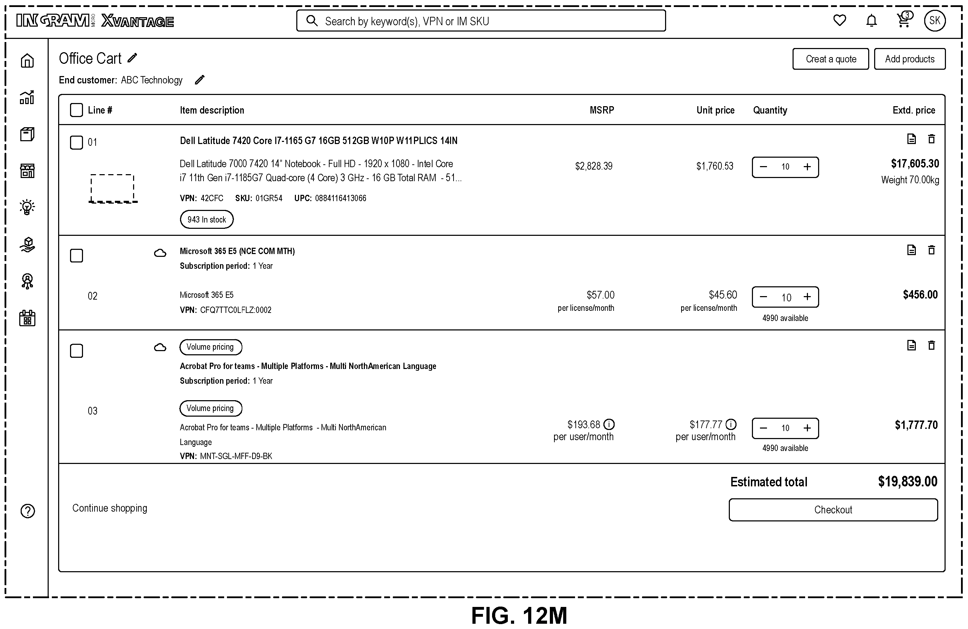

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

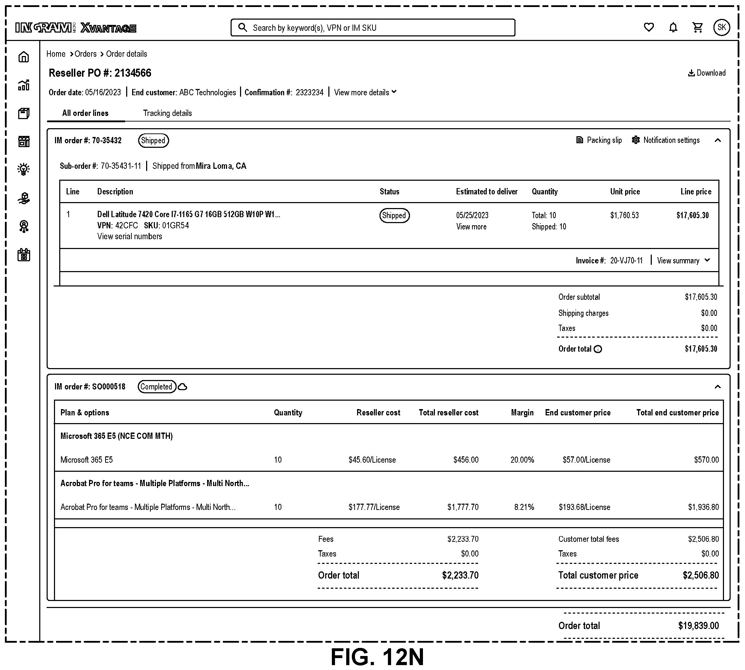

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

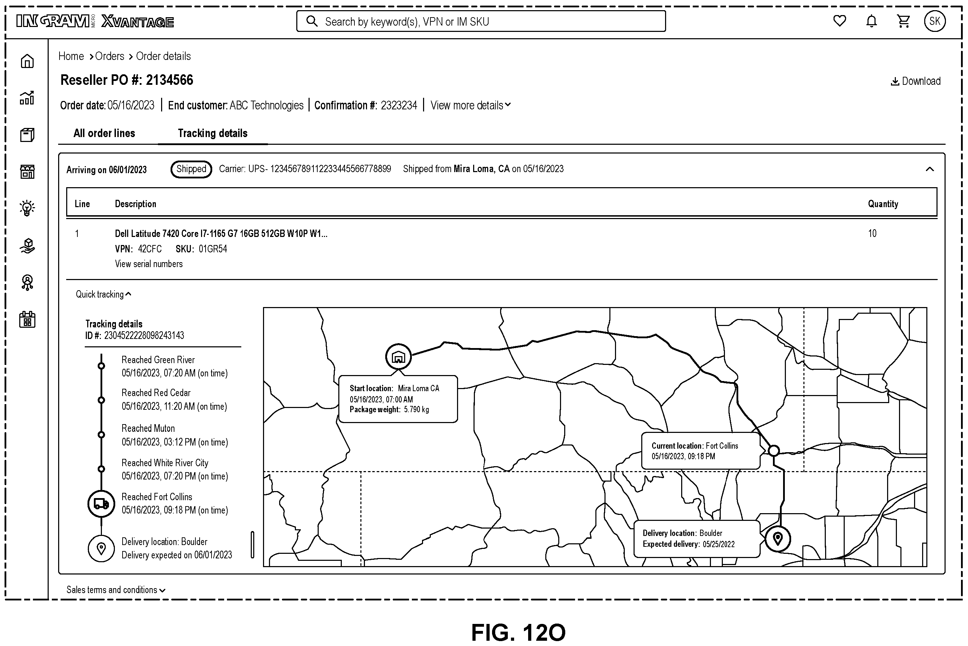

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

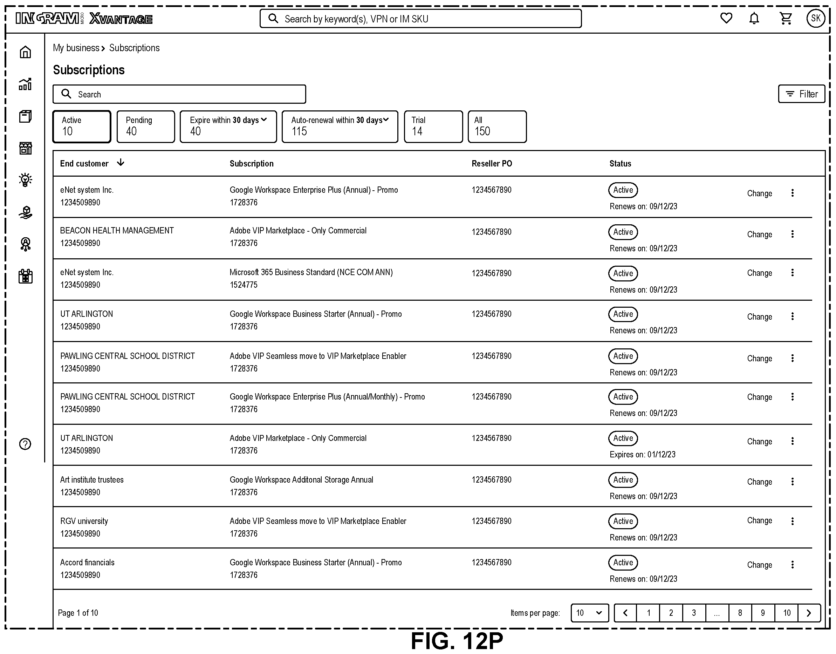

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

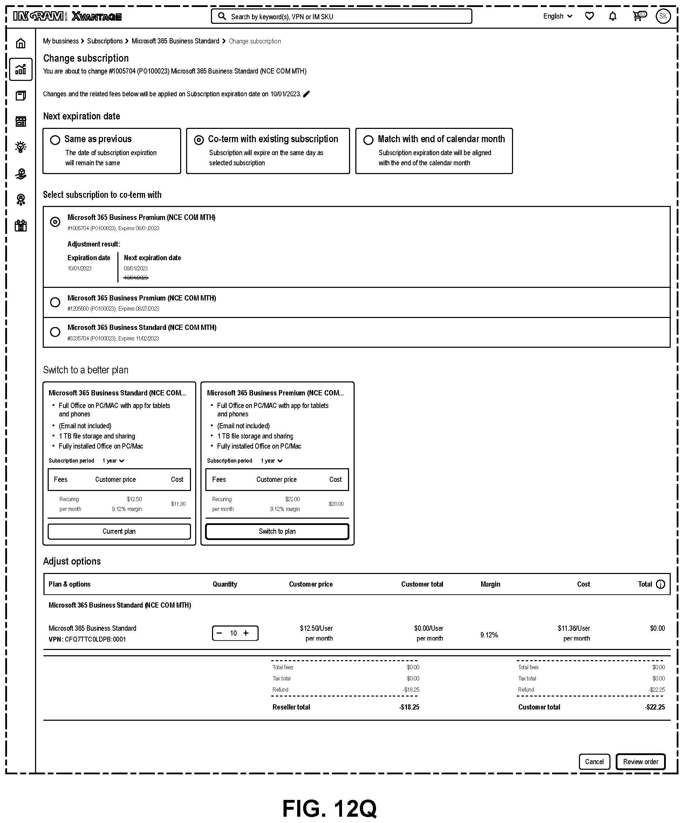

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing users with a comprehensive and user-friendly interface for vendor onboarding, partnership management, customer interaction, order management, subscription management, and tracking within the distribution ecosystem.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computerized method for executing an AaS model conversion, comprising:
receiving user inputs specifying preferences for technology product conversion;
accessing a Real-Time Data Mesh (RTDM) to retrieve data relevant to the user's preferences and market conditions;
utilizing an Advanced Analytics and Machine Learning (AAML) Module to analyze the user inputs and market data for suitability in an AaS model;
generating AaS conversion recommendations through an AaS Conversion Module;
displaying the AaS options to the user via a Single Pane of Glass User Interface (SPoG UI);
facilitating the completion of the AaS conversion process and transferring the order to a vendor system;
executing the AaS conversion order by integrating data from the SPoG UI, RTDM, and vendor systems,
wherein the method is executed by a computer system with a unified platform that integrates data from multiple sources for AaS conversion.

2. The method of claim 1, further comprising validating the AaS conversion using rules and algorithms within the AAML Module to ensure accuracy and relevance of the conversion recommendations.

3. The method of claim 1, wherein the AAML Module utilizes dynamic machine learning algorithms that adapt to changing user preferences and market conditions for effective AaS conversion.

4. The method of claim 1, wherein the RTDM is continuously updated with real-time inventory, user behavior data, and market trends to inform the AaS conversion process.

5. The method of claim 1, further comprising generating real-time reports related to the AaS conversion process, including user engagement metrics and conversion success rates.

6. The method of claim 1, wherein the vendor system for fulfilling the AaS conversion is selected based on criteria including service availability and capability.

7. The method of claim 1, further comprising sending a notification to the user upon successful completion and confirmation of the AaS conversion order.

8. A computerized method for optimizing AaS conversion decisions, comprising:
initiating a subscription request via the SPoG UI;
retrieving user preferences and historical data for AaS conversion;
querying the RTDM to fetch real-time data relevant to the AaS conversion;
applying predictive analytics by the AAML Module to determine optimal subscription models;
configuring the subscription package based on user preferences and available data;
validating the subscription configuration using the AAML Module;
presenting the finalized subscription package to the user via the SPoG UI;
logging details of the AaS conversion process for future analysis and system refinement;
initiating a feedback loop within the system for continual improvement of the AaS conversion.

9. The method of claim 8, further comprising utilizing machine learning algorithms in the feedback loop to analyze user feedback and system performance for continual optimization of the AaS conversion process.

10. The method of claim 8, wherein the RTDM fetches real-time data based on current market conditions and service availability.

11. The method of claim 8, further comprising generating real-time reports related to the AaS conversion process, including metrics such as user satisfaction and service customization level.

12. The method of claim 8, wherein product selections for AaS subscriptions are made based on predefined criteria including user preferences, market trends, and service compatibility.

13. The method of claim 8, further comprising sending a notification to the user upon successful generation and availability of the AaS subscription package.

14. The method of claim 8, wherein the feedback loop for AaS conversion decisions is conducted within a defined time frame based on user engagement and system analytics.

15. A system for automating AaS conversion processes, comprising:
a Real-Time Data Mesh configured to aggregate and disseminate data including user preferences, market trends, and service information;
a Single Pane of Glass User Interface enabling user interactions and displaying subscription options;
an Advanced Analytics and Machine Learning Module responsible for processing data and generating intelligent AaS conversion recommendations;
an AaS Conversion Module interacting with the SPoG UI and RTDM to execute a conversion process including user preference analysis, service selection, and subscription package generation.

16. The system of claim 15, wherein the AaS Conversion Module further comprises a logging mechanism to track user interactions and subscription choices for auditing and analytics purposes.

17. The system of claim 15, wherein the AaS Conversion Module integrates with the AAML Module for validation and optimization purposes, using algorithms stored in the AAML Module to refine subscription recommendations.

18. The system of claim 15, wherein the SPoG UI is designed to be accessible and responsive across various devices, providing an integrated user experience for subscription customization.

19. The system of claim 15, wherein the RTDM is configured to standardize and harmonize data from diverse sources, making it suitable for consumption and analysis by the SPoG UI and other system modules.

20. The system of claim 15, further comprising machine learning models within the AaS Conversion Module, configured to continually refine the conversion process based on user feedback and evolving market data.
